# EUROPEAN PATENT APPLICATION

(11) **EP 2 187 681 A1**
(43) Date of publication of application: **19.05.2010**
(21) Application number: 08801021.0
(22) Date of filing: 28.09.2008
(51) Int. Cl.: H04W 8/04

(54) **DUAL REGISTRATION MANAGEMENT METHOD AND SYSTEM**

(30) Priority: 16.10.2007 CN 200710164036
(71) Applicant: Huawei Technologies Co., Ltd., Longgang District, Shenzhen Guangdong 518129 (CN)
(72) Inventor: GUO, Xiaolong c/o Huawei Technologies Co.Ltd., Longgang District 518129, Shenzhen (CN)
(74) Representative: Kreuz, Georg Maria
(86) International application number: PCT/CN2008/072595
(87) International publication number: WO 2009/052726

(57) **Abstract**

A dual registration management method is provided. The method involves: the home subscriber server HSS saves the access entity information for the user equipment UE to register in at least two networks; when the ISR isn't active and when the UE accesses the access entity of RAT1 from the access entity of RAT2, the access entity of RAT1 doesn't initiate the location update procedure to the HSS if the access entity of RAT1 is the one in which the UE has registered before. Using this method, when the ISR isn't active, the HSS always saves two kinds of RAT entity information. When the UE is moving between the 2G/3G network and the SAE network, no matter whether the ISR is active or not, if only the RAT entity saved in the HSS isn't changed, the entity for the UE to access doesn't need to initiate the procedure to update location to the HSS, and the HSS also doesn't need to initiate the procedure to cancel location. So the signaling load is saved.

## Description

### Field of the Invention

The present invention relates to a communication technology, and in particular, to a method and system for dual registration processing.

### Background of the Invention

A universal mobile telecommunication system (UMTS) is a third generation radio communication network standard defined by the Third Generation Partnership Project (3GPP). A UMTS network consists of a core network and an access network, where the core network includes a circuit switched (CS) domain and a packet switched (PS) domain. The CS domain provides CS-based services, for example, the voice service, and the PS domain provides PS-based services, for example, Internet access.

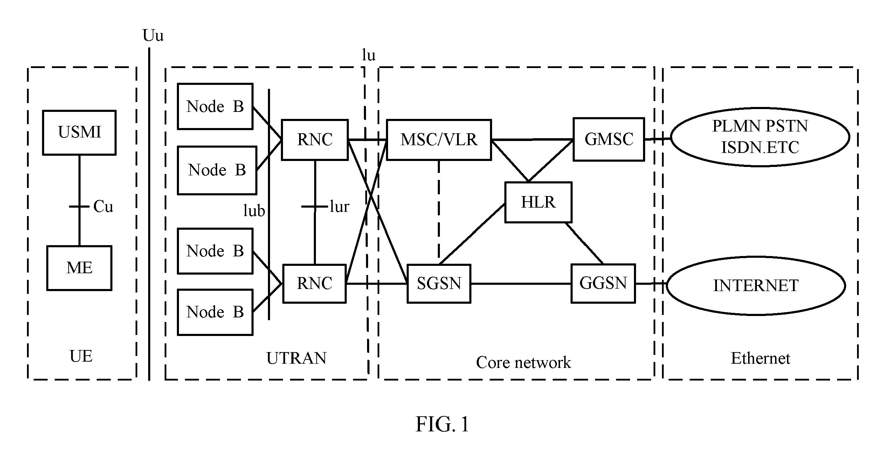

FIG. 1 is a schematic block diagram showing a network structure of a UMTS. As shown in FIG. 1, the core network consists of a PS domain and a CS domain, where the PS domain is composed of a Serving GPRS Support Node (SGSN), a Gateway GPRS Support Node (GGSN) and a Home Location Register (HLR); the CS domain is composed of a Mobile Switching Center (MSC), a Visitor Location Register (VLR) and a Gateway Mobile Switching Center (GMSC). The access network consists of a Radio Network Controller (RNC) and a NodeB. Each RNC is connected to multiple NodeBs, and each SGSN is connected to multiple RNCs. An Iub interface is used between a NodeB and an RNC; an Iu interface is used between an RNC and an SGSN; a Gn or Gp interface is used between an SGSN and a GGSN; a Gi interface is used between a GGSN and a Packet Data Network (PDN); a Gr interface is used between an SGSN and an HLR; and a Gc interface is used between a GGSN and an HLR. The Gr interface and Gc interface transmit only signaling messages and do not transmit user service data. An E interface is used between an MSC and a GMSC, and a B interface is used between an MSC and a VLR. The Iu interface is a key interface between the access network and the core network. The radio resource management and control are isolated in the access network by the Iu interface, so that the core network focuses on the service provision only.

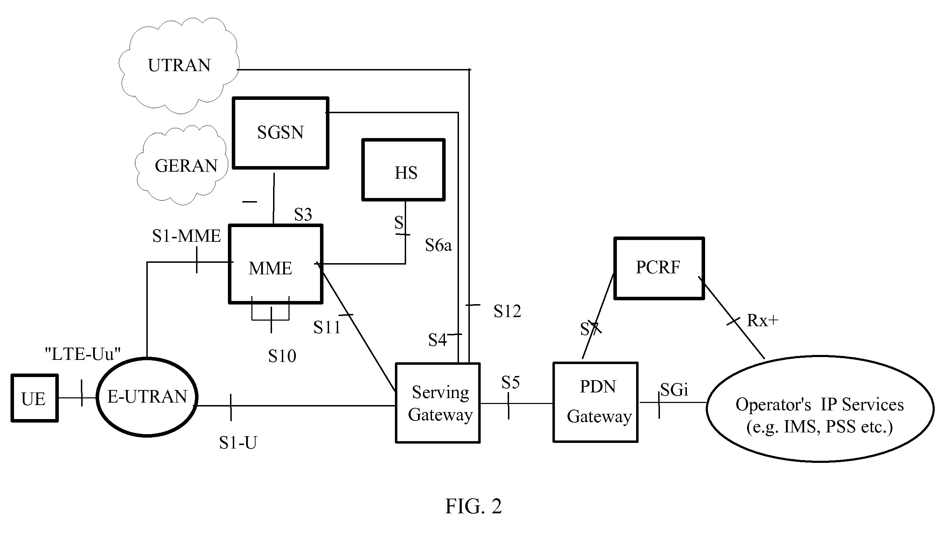

FIG. 2 shows an architecture of a long term evolution (LTE) network or a system architecture evolution (SAE) network in the prior art.

The architecture and functions of an LTE or SAE network will be described as follows. In an evolved packet core network:

A Mobility Management Entity (MME) is configured to: store mobility management contexts of a User Equipment (UE), process Non Access Stratum (NAS) signaling, and ensure the security of the NAS signaling.

An SAE Gateway (SAE GW) is composed of a serving gateway (S-GW) and a PDN gateway (P-GW). S-GW is configured to store user plane contexts of the UE and perform lawful interception and packet data routing. An S11 interface is used between the S-GW and the MME. The S11 interface is responsible for the communication between the MME and the S-GW and exchange of mobility management information and session control information of the UE.

An Evolved UMTS Terrestrial Radio Access Network (E-UTRAN) is responsible for connection between the control plane and the user plane.

The P-GW is responsible for the function of user plane anchor point when the UE accessing the PDN, and is connected to the S-GW through an S5 interface. A Policy and Charging Rules Function (PCRF) is configured to transmit QoS and charging policy control information to the P-GW through an S7 interface.

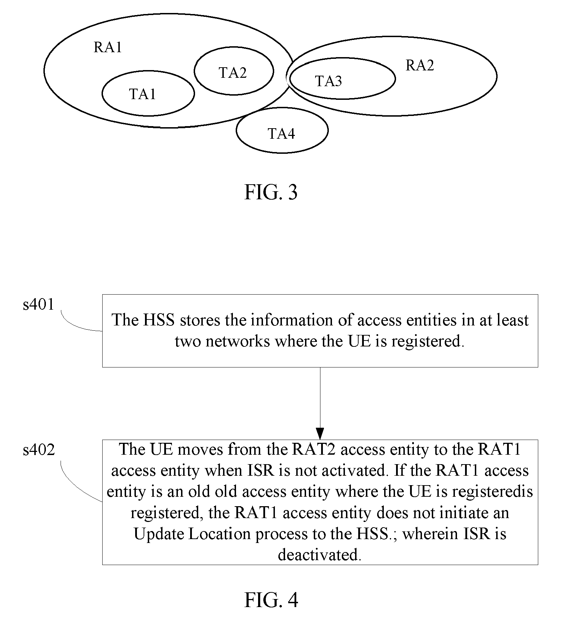

Idle State Signaling Reduction (ISR) between different Radio Access Technologies (RAT), such as between an SAE network and a pre-SAE network (that is, a 2G/3G network), is an important topic. For example, when the UE moves between different RATs (for example, a 2G/3G network and an evolved network), the UE may cause registration change when camping on different networks. Frequent network registration processes of the UE waste the air interface resources. As shown in FIG. 3, RA1 and RA2 are routing areas (RAs) in a current 2G/3G network. The UE in the current 2G/3G network may initiate a routing area update (RAU) process each time when it changes the RA. Certainly, if the UE does not change the RA, the UE may also initiate a periodic location update process to notify the network of the current UE state to prevent the network from paging the UE constantly when the UE leaves the network. Situation that the UE updates its location periodically is not considered in the following description, although it exists.

TA1, TA2, TA3 and TA4 are tracking areas (TAs) in the evolved network, which are similar to the RAs in the 2G/3G network. When a multi-mode UE moves in these TAs, frequent network registration processes may occur if no particular mechanism is available. For example, when the UE enters RA1, it needs to register with the SGSN in the 2G/3G network; when the UE enters TA1, it needs to register with the MME in the evolved network; when the UE goes from TA1 to RA1, it needs to re-register with the SGSN in the 2G/3G network. The purpose of registration is to enable the network to page the UE in a RAT. However, frequent registration processes bring a large number of registration signaling overheads.

Inter-RAT ISR is proposed to solve the preceding problem. At present, a method for reducing the impact of registration/update of an idle UE in inter-RAT on the air interface is as follows: The UE registers with an access network (a 2G/3G network or an evolved network) after attaching to the access network; the UE registers with another access network after moving to another access network. Thus, the UE registers with two access systems at the same time. In this case, the UE does not need to initiate any registration process when moving between the registered areas, such as RA or TA, in these two networks. When the UE changes a new RA or TA, it needs to initiate a Routing Area Update (RAU) or a Tracking Area Update (TAU) process. Both the access systems (SGSN in the 2G/3G network or MME in the evolved network) where the UE is registered have contexts of the UE. Because a concept of registration in multiple TAs is introduced in the SAE network, that is, multiple TAs may be allocated for a UE, the preceding registered area, such as RA or TA, allocated for the UE may be an RA list or a TA list. Because the UE is registered in multiple RAs or TAs, it may be paged in related registered areas of the SAE network and 2G/3G network at the same time.

In the prior art, when ISR is deactivated or the UE registers with only one RAT entity, only the information of the RAT entity is registered in a home subscriber server (HSS). When the UE moves from one RAT entity to another RAT entity, the new RAT entity may replace the old one in the HSS. This process is called a single registration method.

If ISR is not activated, the UE initiates a TAU process when the UE moves from a 3G network to an SAE network; the new MME sends an Update Location request to the HSS; and the HSS deletes the registration information of the SGSN in the 3G network. Thus, the HSS stores the registration information of a RAT entity, which is called the single registration method.

### Summary of the Invention

The present invention provides a method and a system for dual registration to solve the problem that the UE sends an Update Location request or a Cancel Location request to the HSS constantly when moving from one RAT entity to another RAT entity.

As a first aspect the present invention provides a method for dual registration processing. The method includes:
information of access entities in at least two RAT networks where a User Equipment (UE) is registered is stored by a Home Subscriber Server (HSS);
when the UE accessing a Radio Access Technology (RAT)1 access entity from a RAT2 access entity, not initiating, by the RAT1 access entity, an Update Location process to the HSS, if the RAT1 access entity is an old access entity where the UE is registered; wherein ISR is deactivated.

As a second aspect the An HSS according to the present invention includes:
a storing unit, configured to store information of access entities in at least two RAT networks where a UE is registered; and
a processing unit, configured to initiate a Cancel Location process to an old access entity where the UE is registered, and to update access entity information stored in the storing unit by replacing the an old access entity where the UE is registered with an access entity accessed by the UE, if the access entity accessed by the UE is different from the old access entity where the UE is registered; wherein, ISR is not activated, and the access entity accessed by the UE and the old access entity where the UE is registered belong to the same RAT.

As a third aspect the system for dual registration processing according to the present invention includes a network that can communicate with a UE, wherein:
the network includes an HSS, which includes:
   a storing unit, configured to store information of access entities in at least two networks where a UE is registered; and
   a processing unit, configured to initiate a Cancel Location process to an old access entity where the UE is registered, and to update access entity information stored in the storing unit by replacing the old access entity where the UE is registered with an access entity accessed by the UE, if the access entity accessed by the UE is different from the old access entity where the UE is registered; wherein, ISR is not activated, and the access entity accessed by the UE and the old access entity where the UE is registered belong to the same RAT.

Compared with the prior art, the present invention has the following merits:

In the method according to the present invention, the HSS stores the information of two RAT entities; when the UE moves between a 2G/3G network and an SAE network, no matter whether ISR is activated in the network, an entity accessed by the UE does not need to initiate an Update Location process, the HSS does not need to initiate a Cancel Location process, and the information of RAT entities needs no changes in the HSS as long as the entity accessed by the UE is a RAT entity stored in the HSS. Thus, signaling overheads are saved.

### Brief Description of the Drawings

FIG. 1 is a schematic block diagram showing a network structure of a UMTS in the prior art;
FIG. 2 is a schematic block diagram showing a network structure of an LTE/SAE network in the prior art;
FIG. 3 is a schematic block diagram showing a network structure of a network with multiple RATs in the prior art;
FIG. 4 is a flowchart of a method for dual registration processing provided in a first embodiment of the present invention;
FIG. 5 is a flowchart of a method for dual registration processing provided in a second embodiment of the present invention;
FIG. 6 is a flowchart of a method for dual registration processing provided in a third embodiment of the present invention;
FIG. 7 is a flowchart of a method for dual registration processing provided in a fourth embodiment of the present invention;
FIG. 8 is a flowchart of a method for dual registration processing provided in a fifth embodiment of the present invention;
FIG. 9 is a schematic block diagram showing a structure of an HSS provided in a sixth embodiment of the present invention; and
FIG. 10 is a schematic block diagram showing a system for dual registration processing provided in a seventh embodiment of the present invention.

### Detailed Description of the Invention

In the present invention, after the UE accesses the MME, the UE attaches to two RAT entities when the MME activates ISR; the HSS does not initiate a Cancel Location process to the SGSN; and the HSS stores the registration information of the MME and the SGSN; when the MME deactivates ISR, the UE can be attached to only one RAT entity; thus, the HSS needs to delete the stored information of the other RAT entity.

In the single registration method, the stored information of the RAT entities in the HSS depends more on whether ISR is activated or deactivated.

In the method for dual registration processing provided in embodiments of the present invention, the HSS stores the information of the two RAT entities before either of the two entities initiates a Purge process. In this case, when the UE moves between a 2G/3G network and an SAE network, the RAT entity accessed by the UE does not initiate an Update Location process to the HSS if the RAT entities stored in the HSS are not changed; if the RAT entities stored in the HSS are changed, a new RAT entity accessed by the UE initiates an Update Location process to the HSS; the HSS initiates a Cancel Location process to an old RAT entity, whose type is the same as that of the RAT entity accessed by the UE, deletes the information of the old RAT entity, and replaces the old RAT entity information with the new RAT entity information; the old RAT entity deletes its stored UE context. The change of the RAT entity does not trigger the HSS to delete the other RAT entity. When the network activates ISR, the UE is in the attached state in both the RAT entities. When ISR is not activated in the network, the UE is in the attached state in one RAT entity where the UE is registered and in the detached state in the other RAT entity. When the UE is powered off, the UE is in the detached state in both the RAT entities. In embodiments of the present invention, when either of the RAT entities is purged, the HSS deletes the information of the purged RAT entity, and stores the information of the other RAT entity only. This case is also covered by the method for dual registration processing.

The present invention is described in detail with reference to the drawings and embodiments as follows.

As shown in FIG. 4, a method for dual registration processing provided in the first embodiment includes the following steps:
S401. The HSS stores the information of access entities in at least two networks where the UE is registered.
S402. When ISR is deactivated, the UE moves from the RAT2 access entity to the RAT1 access entity; if the RAT1 access entity is an old access entity where the UE is registered, the RAT1 access entity does not initiate an Update Location process to the HSS

According to the method provided in this embodiment of the present invention, the HSS stores the information of two RAT entities; when the UE moves between a 2G/3G network and an SAE network, no matter whether ISR is activated in the network, an entity accessed by the UE does not need to initiate an Update Location process and the HSS does not need to initiate a Cancel Location process, the HSS does not need to initiate a Cancel Location process, and the RAT entities needs no changes in the HSS so long as the entity accessed by the UE is a RAT entity stored in the HSS. Thus, signaling overheads are saved.

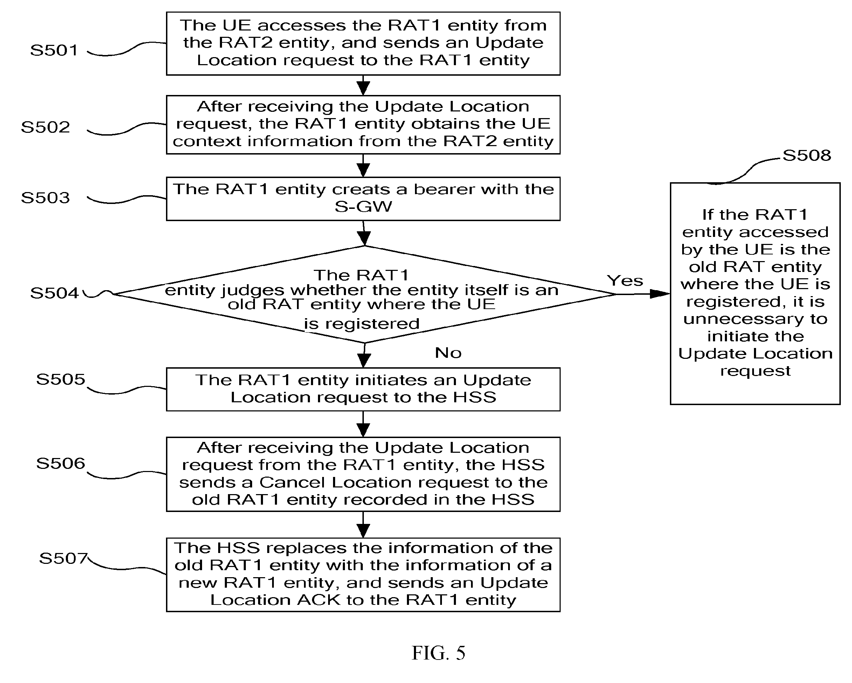

As shown in FIG. 5, a method for dual registration processing provided in the second embodiment includes the following steps:
S501. The UE accesses the RAT1 entity from the RAT2 entity, and sends an Update Location (TAU or RAU) request to the RAT1 entity.

The preceding Update Location request may be a TAU or RAU request. The preceding RAT1 entity and RAT2 entity may be the MME or SGSN.
S502. After receiving the Update Location request, the RAT1 entity obtains the UE context information from the RAT2 entity. The process of obtaining the context information is usually referred as a context retrieval process.
S503. The RAT1 entity creates a bearer with the S-GW.
S504. The RAT1 entity judges whether the entity itself is an old RAT entity where the UE is registered. If yes, the process goes to S508; otherwise, the process goes to S505.
S505. The new RAT1 entity initiates an Update Location request to the HSS.
S506. After receiving the Update Location request from the new RAT1 entity, the HSS sends a Cancel Location request to the old RAT1 entity stored in the HSS.

In this step, the type of the old RAT1 entity stored in the HSS is the same as that of the RAT entity accessed by the UE.
S507. The HSS replaces the stored information of the old RAT1 entity with the information of the new RAT1 entity, and sends an Update Location ACK to the new RAT1 entity.
S508. If the RAT1 entity accessed by the UE is the old RAT entity where the UE is registered, it is unnecessary to initiate an Update Location request, thus saving signaling overheads.

If ISR is not activated, the UE can only attach to one RAT entity, and the RAT1 entity needs to send a Detach UE request to the RAT2 entity. This process may be implemented as follows: The RAT1 entity sends an explicit signaling message (a Detach Request) to the RAT2 entity; or this process may be implemented during the context retrieval process. If ISR is activated, the UE attaches to both RAT entities. Then, it is unnecessary to initiate a Detach UE request.

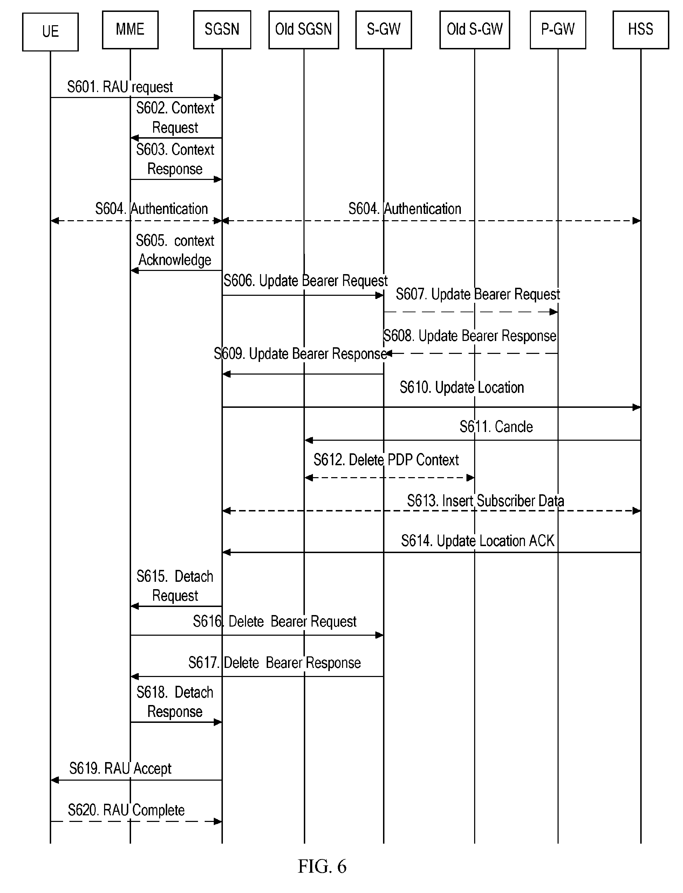

In the third embodiment of the present invention, a method for dual registration processing is provided, supposing the UE moves from an SAE network to a 2G/3G network with ISR deactivated in the network. As shown in FIG. 6, the method includes the following steps (supposing the UE accesses the SGSN):
S601. The UE initiates an RAU process by sending an RAU Request to the SGSN in the 2G/3G network.

Specifically, because the HSS uses a dual registration method, the HSS stores the both information of the MME and the SGSN before the SGSN in the 2G/3G network is purged. When ISR is not activated in the network, the UE only attaches to the MME before moving; that is, the UE is in the attached state in the MME and is in the detached state in the SGSN.
S602. After receiving the RAU Request, the SGSN sends a Context Request to the MME to obtain the latest UE context information. The SGSN that receives the RAU Request is an SGSN stored in the HSS or is a new SGSN.
S603. After receiving the Context Request, the MME sends a Context Response that carries the latest UE context information to the SGSN. S602 to S603 are usually referred as context retrieval process.
S604. The UE and the SGSN perform mutual authentication and so do the SGSN and the HSS. This step may be omitted.
S605. After receiving the Context Response, the SGSN sends a Context Acknowledge message indicating the reception of the latest UE context information to the MME.
S606. When the UE moves from the SAE network to the 2G/3G network, the S-GW may be changed. If the S-GW is changed, the SGSN sends a Create Bearer Request to the S-GW, requesting to create a bearer with a new S-GW. If the S-GW remains unchanged, the SGSN sends an Update Bearer Request to the S-GW, requesting to update the bearer between the S-GW and the MME.
S607. The S-GW sends an Update Bearer Request to the P-GW.
S608. After receiving the Update Bearer Request, the P-GW sends an Update Bearer Response to the S-GW. S607 to S608 may be omitted.
S609. When the S-GW is a new S-GW, the S-GW sends a Create Bearer Response to the SGSN; when the S-GW is an old S-GW, the S-GW sends an Update Bearer Response to the SGSN. The SGSN creates a bearer with the S-GW.
S610. If the SGSN is a new SGSN, the SGSN initiates an Update Location request to the HSS.
S611. After receiving the Update Location request from the new SGSN, the HSS sends a Cancel Location request to the old SGSN stored in the HSS.
S612. If the UE is powered off abnormally before accessing the new SGSN, the old SGSN still stores the PDP, i.e. bearer, context of the UE when the UE accesses the new SGSN. The old SGSN needs to perform a Delete Bearer Context operation with the old S-GW, requesting to delete the UE bearer context.
S613.The HSS initiates Insert Subscriber Data process between the SGSN and the HSS. This step may be omitted.
S614. The HSS replaces the stored information of the old SGSN in the HSS with that of the new SGSN, and sends an Update Location ACK to the new SGSN.

If the SGSN accessed by the UE is an SGSN whose information is stored in the HSS, the SGSN does not need to initiate the Update Location request; that is, S610 to S614 may be omitted, thus saving signaling overheads. Specifically, the RAU Request sent by the UE carries a UE ID, for example, a P-TMSI and/or an RAI allocated by the SGSN. If the SGSN finds the UE context according to the UE ID, it indicates that the the SGSN is stored in the HSS; otherwise, the SGSN is a new SGSN, and needs to initiate the Update Location process to the HSS.
S615. The SGSN sends a Detach Request to the MME, requesting the MME to detach the UE.
S616. After receiving the Detach Request, the MME sends a Delete Bearer Request to the S-GW.
S617. After receiving the Delete Bearer Request, the S-GW deletes the bearer with the SAE network, and returns a Delete Bearer Response to the MME.
S618. The MME sends a Detach Response to the SGSN. In this case, the UE is in the detached state in the MME.
S619. After receiving the Detach Response, the SGSN sends an RAU Accept message to the UE.
S620. After receiving the RAU Accept message, the UE sends an RAU Complete message indicating the completion of routing update to the SGSN. If the TMSI of the UE remains unchanged, this step may be omitted.

In the preceding embodiment, the SGSN sends a Detach Request message to the MME, requesting the SAE network to detach the UE. This request may also be sent during the context retrieval process, or other methods may be used to enable the SAE network to detach the UE.

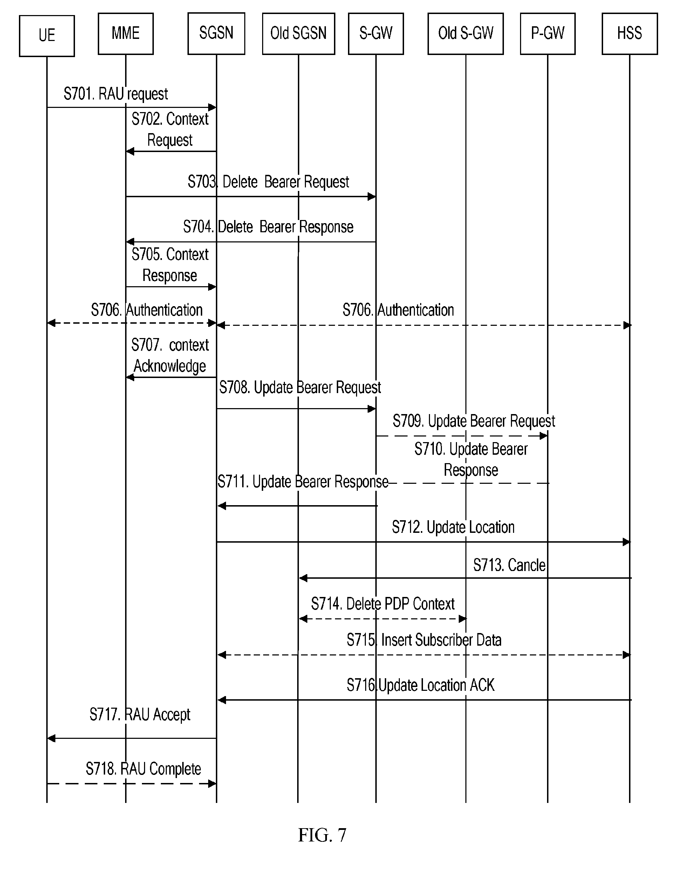

In the fourth embodiment of the present invention, a method for dual registration processing is provided, supposing the UE moves from an SAE network to a 2G/3G network with ISR deactivated in the network, and a Detach UE request is initiated during the context retrieval process. As shown in FIG. 7, the method includes the following steps:
S701. The UE initiates an RAU process by sending an RAU Request to the SGSN in the 2G/3G network.
S702. After receiving the RAU Request, the SGSN sends a Context Request to the MME to obtain the latest UE context information. The SGSN that receives a TAU Request is an SGSN stored in the HSS or is a new SGSN.
S703. After receiving the Context Request, the MME determines that the SGSN has not activated ISR according to the information carried in the Context Request, and sends a Delete Bearer Request to the S-GW to delete the bearer between the S-GW and the SAE and detach the UE.
S704. After receiving the Delete Bearer Request, the S-GW deletes the bearer with the SAE network, and returns a Delete Bearer Response to the MME.
S705. The MME sends a Context Response that carries the latest UE context information to the SGSN. S602 to S605 are usually referred as a context retrieval process.
S706 to S716 are the same as S604 to S614, and will not be further described.
S717. After receiving an Update Location ACK from the HSS, the SGSN sends an RAU Accept message to the UE.
S718. After receiving the RAU Accept message, the UE sends an RAU Complete message to the SGSN indicating completion of the routing update.
S703 and S704 may be executed after S707. That is, after receiving a Context Acknowledge message from the SGSN, the MME determines to detach the UE and initiate a bearer deletion process. Subsequent processes are the same, and will not be further described.

In the third embodiment and the fourth embodiment, with ISR deactivated in the network, the UE moves from the SAE network to the 2G/3G network, and the SGSN triggers the HSS to initiate the Cancel Location process. This is similar to the case in which the UE moves from the 2G/3G network to the SAE network and the MME triggers the HSS to initiate the Cancel Location process with ISR deactivated in the network, so it will not be further described.

In the preceding embodiment, a Radio Resource Control (RRC) message sent by the UE carries a Temporary Mobile Subscriber Identity (TMSI) information allocated by the RAT access entity, or TMSI information and Location Area ID, or International Mobile Subscriber Identification Number (IMSI). In this case, when the UE enters the 2G/3G network, the UE may access an old SGSN where the UE is registered. When the UE moves from the 2G/3G network to the SAE network, the RRC message carries an S-TMSI. In this case, the eNodeB may select and access an MME according to the related information in the S-TMSI. That is, if the UE enters a pool area, also referred as shared area, of the old MME where the UE is registered, the UE may select the old MME where the UE is registered; otherwise the UE selects a new MME.

The UE needs to carry both the S-TMSI and P-TMSI information in a Non Access Stratum (NAS). When the UE accesses an old SGSN where the UE is registered, the SGSN may find the UE according to the P-TMSI carried in the RRC message. The purpose of carrying the S-TMSI in the RRC message is to obtain the UE context from the MME.

The time when the UE stores the TMSI of a RAT entity that detaches the UE may be set to the time when the network initiates a Purge process. In this case, when the network purges the UE because the UE does not register within the time of a timer, that is, when the network deletes the UE context and the entity information in the HSS, the UE should delete the TMSI of the RAT entity after the timer expires. When the UE re-enters the RAT entity to initiate the update, the TMSI of the RAT entity does not need to be carried because the RAT entity does not store the UE context.

In the preceding embodiment, if the SGSN accessed by the UE is a Pre-R8 SGSN (that is, the SGSN version earlier than Release 8, which does not have the ISR function), the MME may determine that the SGSN is a Pre-R8 SGSN according to the received Context Request or other explicit signaling messages, for example, the MME determines according to the configuration or the version number of a GTP, and detach the UE automatically. Alternatively, the HSS determines that the SGSN is a Pre-R8 SGSN, and initiates a Cancel Location request to the MME and the old SGSN. This process is also applicable to the case in which when ISR is activated, the UE accesses the Pre-R8 SGSN from the MME. Because the Pre-R8 SGSN does not support ISR, ISR needs to be deactivated. After the UE accesses the Pre-R8 SGSN, the MME detaches the UE automatically, for example, MME may determine to detach the UE according to the configuration or the GTP version number of the received message. Because the Pre-R8 SGSN does not have the ISR function, it does not request the other RAT entity to detach the UE.

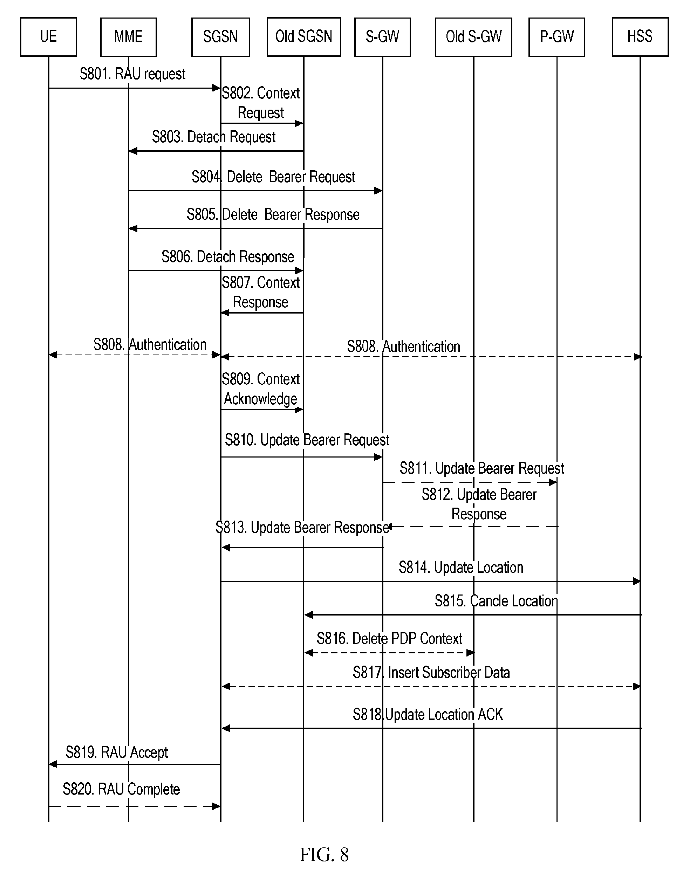

In the fifth embodiment of the present invention, a method for dual registration processing is provided supposing the UE moves to the 2G/3G network, wherein SGSN is changed and ISR is activated or deactivated. As shown in FIG. 8, the method includes the following steps:
S801. When ISR is activated, the UE initiates an RAU process by sending an RAU Request to the Pre-R8 SGSN in the 2G/3G network.

The SGSN is a Pre-R8 SGSN rather than the old SGSN where the UE is registered.
S802. Because the Pre-R8 SGSN does not support ISR, the Pre-R8 SGSN deactivates ISR and obtains the context from the old SGSN where the UE is registered after receiving the RAU Request. Then, the Pre-R8 SGSN sends a Context Request to the old SGSN to obtain the latest UE context information.
S803. After receiving the Context Request, the old SGSN determines that the Pre-R8 SGSN does not support ISR according to the information carried in the Context Request, and sends a Detach Request to the MME.

In this step, the old SGSN may also send a Context Request or other explicit signaling messages to the MME to trigger the MME to detach the UE after receiving the Context Request.
S804. After receiving the Detach Request, the MME sends a Delete Bearer Request to the S-GW to delete the bearer between the S-GW and the SAE and detach the UE.
S805. After receiving the Delete Bearer Request, the S-GW deletes the bearer with the SAE network, and returns a Delete Bearer Response to the MME.
S806. After receiving the Delete Bearer Response, the MME sends a Detach Response to the old SGS.
S807. After receiving the Detach Response, the old SGSN sends a Context Response that carries the latest UE context information to the Pre-R8 SGSN.
S808. The UE and the Pre-R8 SGSN perform mutual authentication, and so do the Pre-R8 SGSN and the HSS. This process may be omitted.
S809. The Pre-R8 SGSN sends a Context Acknowledge message to the old SGSN.
S810 to S820 are the same as S708 to S718, and will not be further described.

In the preceding embodiments, the entity that initiates a Detach UE process may not exchange the Delete Bearer Request/Response with the S-GW. Instead, the entity accessed by the UE deletes the bearer information of the other RAT entity in the S-GW through the Update Bearer or Create Bearer process. For example, in S810 rather than S805 and S806 of this embodiment, the S-GW is triggered to delete the Bearer Context of the SAE network.

The UE needs to carry both the S-TMSI information and the P-TMSI information in the NAS, but the Pre-R8 SGSN cannot identify two TMSIs. Thus, the following processing methods may be used:
(1) The UE always uses a TMSI to access the Pre-R8 SGSN, for example, the TMSI of the last accessed RAT, TMSI of a local access system or TMSI of the other system.
(2) If the UE uses two TMSIs to access the Pre-R8 SGSN, the TMSI of one RAT entity is changed to a Type Length Value (TLV) format. Even if the Pre-R8 SGSN cannot identify the TLV format, no error will occur. Thus, the Pre-R8 SGSN is not affected.

The preceding embodiment is described supposing the SGSN triggers the HSS to initiate the Cancel Location process when the UE moves from the SAE network to the 2G/3G network. This is similar to the case in which the MME triggers the HSS to initiate the Cancel Location process when the UE moves from the 2G/3G network to the SAE network, so it will not be further described.

Through the method provided in the preceding embodiments, the HSS store the information of two RAT entities after ISR is activated. When the UE moves between the 2G/3G network and the SAE network, no matter whether ISR is activated in the network, the entity accessed by the UE does not need to initiate an Update Location process to the HSS and the HSS does not need to initiate a Cancel Location process so long as RAT entities stored in the HSS are not changed, which saves signaling overheads. The information of old entity in the same RAT may be deleted only when the entity in the RAT is changed.

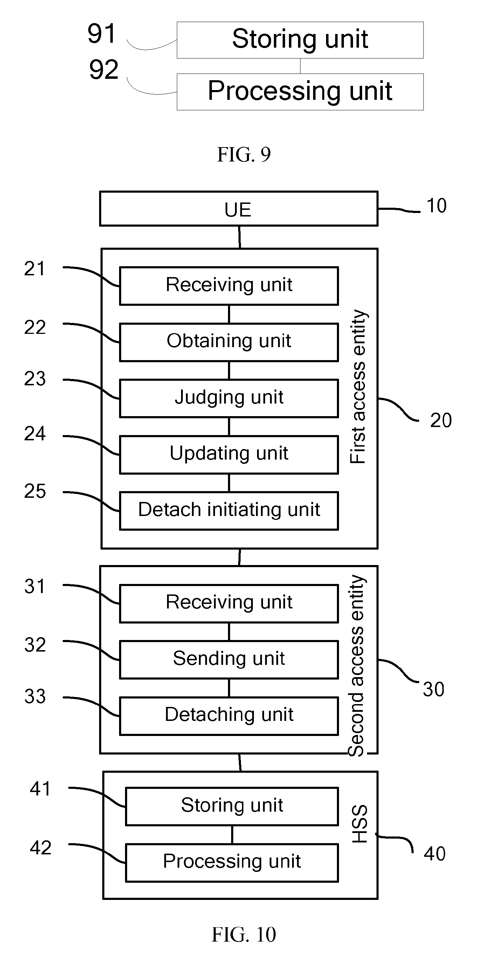

As shown in FIG. 9, An HSS provided in the sixth embodiment of the present invention includes:
a storing unit 91, configured to store information of access entities in at least two networks where a UE is registered; and
a processing unit 92, configured to initiate a Cancel Location process to an old access entity where the UE is registered, and to update access entity information stored in the storing unit by replacing the the old access entity where the UE is registered with the the access entity accessed by the UE, if the access entity accessed by the UE is different from the old access entity where the UE is registered; wherein, ISR is not activated, and the access entity accessed by the UE and the old access entity where the UE is registered belong to the same RAT.

Through the system and apparatus provided in the preceding embodiments, after ISR is activated, the HSS stores the information of the two access entities. When the UE moves between the 2G/3G network and the SAE network, no matter whether ISR is activated in the network, the entity accessed by the UE does not need to initiate an Update Location process to the HSS and the HSS does not need to initiate a Cancel Location process so long as RAT entities stored in the HSS are not changed, thus saving signaling overheads.

As shown in FIG. 10, a system for dual registration processing provided in the seventh embodiment of the present invention includes a network entity that can communicate with a UE10, where the network entity includes an HSS40. The dual registration processing system includes:
the UE10, configured to initiate an Update Location request;
a first access entity 20, configured to receive the Update Location request from the UE10, obtain the UE10 context from a second access entity 30, and judge whether the first access entity 20 is an old entity where the UE10 is registered; if the first access entity 20 is not the old entity, send an Update Location request to the HSS40; and send a Detach UE10 request to the second access entity 30; wherein ISR is deactivated.;
the second acces entity 30, configured to receive a Context Request from the first access entity 20, send the UE context information to the first access entity 20, and detach the UE10 when ISR is deactivated; and
the HSS40, configured to store the information of access entities; and if the first access entity 20 is not the old access entity where the UE10 is registered, receive the Update Location request from the first access entity 20, update the stored information of the access entities by replacing the old access entity with the first access entity information, wherein the first access entity and the old access entity belong to a same RAT.

The first access entity 20 further includes:
a receiving unit 21, configured to receive the Update Location request from the UE10;
an obtaining unit 22, configured to obtain the context information of the UE 10;
a judging unit 23, configured to judge whether the first access entity 20 is the old access entity where the UE10 is registered; if the first access entity 20 is not the old entity, send the judgment result to an updating unit 24;
the updating unit 24, configured to receive the judgment result from the judging unit 23, and send an Update Location request to the HSS40; and
a detach initiating unit 25, configured to initiate a Detach UE10 request to the second access entity 20, wherein ISR is deactivated.

The second access entity 30 further includes:
a receiving unit 31, configured to receive a Context Request from the first access entity 20;
a sending unit 32, configured to send the UE10 context information to the first access entity 20; and
a detaching unit 33, configured to detach the UE10 after receiving the Detach UE10 request from the detach initiating unit 25, wherein ISR is deactivated.

The HSS40 further includes:
a storing unit 41, configured to store the information of the entity where the UE is registered; and
a processing unit 42, configured to initiate a Cancel Location process to the old access entity where the UE is registered, and to update access entity information stored in the storing unit by replacing the old access entity information with the first access entity information, if the access entity accessed by the UE is different from the old access entity where the UE is registered, wherein the first access entity and the old access entity belong to a same RAT.

A first access entity provided in the eighth embodiment of the present invention includes:
a receiving unit, configured to receive an Update Location request from a UE;
an obtaining unit, configured to obtain the context information of UE;
a judging unit, configured to judge whether the first access entity is an old access entity where the UE is registered during the location update or other access processes of the UE; if the first access entity is not the old entity, send the judgment result to an updating unit;
the updating unit, configured to receive the judgment result from the judging unit, and send an Update Location request to the HSS; and
a detach initiating unit 25, configured to initiate a Detach UE request to the second access entity, wherein ISR is deactivated.

The first access entity is the same as the first access entity 20 provided in the fifth embodiment in terms of structure, function and relation with other network entities in the network, and will not be further described.

A second access entity provided in the ninth embodiment of the present invention includes:
a receiving unit, configured to receive a Context Request from a first access entity;
a sending unit, configured to send the UE context information to the first access entity; and
a detaching unit, configured to detach the UE after receiving the Detach UE request from the first access entity, wherein ISR is deactivated.

The second access entity is the same as the second access entity 30 provided in the fifth embodiment in terms of structure, function and relation with other network entities in the network, and will not be further described.

Through the system and apparatus provided in the preceding embodiments, after ISR is activated, the HSS stores the information of the two access entities. When the UE moves between the 2G/3G network and the SAE network, no matter whether ISR is activated in the network, the entity accessed by the UE does not need to initiate an Update Location process to the HSS and the HSS does not need to initiate a Cancel Location process so long as RAT entities stored in the HSS are not changed, which saves signaling overheads.

The present invention is not limited to ISR between the 2G/3G network and the SAE network, and is also applicable to ISR between any two access entities.

Through the preceding description of embodiments of the present invention, it is understandable to those skilled in the art that embodiments of the present invention may be implemented by hardware or by software in combination with a necessary hardware platform. Thus, the technical solution of the present invention may be made into software. The software may be stored in a non-volatile storage medium (CD-ROM, USB disk, or mobile hard disk), and include several instructions that instruct a computer device (personal computer, server, or network device) to perform the methods provided in each embodiment of the present invention.

Although the present invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for dual registration processing, **characterized in that** the method comprises:
information of access entities in at least two networks where a User Equipment (UE) is registered is stored by a Home Subscriber Server (HSS);
when Idle State Signaling Reduction (ISR) is deactivated, and the UE accesses a Radio Access Technology (RAT) 1 access entity from a RAT2 access entity,
if the RAT1 access entity is the old access entity where the UE is registered,not initiating, by the RAT1 access entity, the Update Location process to the HSS.

2. The method of claim 1, wherein after the UE accesses a RAT1 access entity from a RAT2 access entity, the UE is in attached state in the RAT1 entity, and is in detached state in the RAT2 entity.

3. The method of claim 2, wherein the HSS stores the information of two RAT entities where the UE is registered, when ISR is deactivated or activated, or UE is powered off.

4. The method of claim 1, wherein the judging whether the RAT1 access entity is the old access entity where the UE is registered comprises:
judging, by the RAT1 access entity, whether the RAT1 access entity itself is the old access entity where the UE is registered according to any one or a combination of following items carried in a Update Location Request: Temporary Mobile Subscriber Identity, TMSI, information which is allocated by a RAT access entity; TMSI information and Location Area ID; or International Mobile Subscriber Identification Number, IMSI.

5. The method of claim 2, wherein the method comprises:
when the UE accesses the RAT1 access entity from the RAT2 access entity with ISR deactivated,
triggering, by the RAT1 access entity, the RAT2 access entity to detach the UE through sending any one of following message: an explicit signaling message; a Context Request; and a Context Acknowledge.

6. The method of claim 2, wherein the method comprises:
detaching automatically, by the RAT2 access entity, the UE, if the RAT1 access entity is a Pre-R8 Serving GPRS Support Node, SGSN.

7. The method of claim 2, wherein the method comprises:
accessing, by the UE, the RAT1 access entity with TMSI information allocated by a RAT, if the RAT1 access entity is a Pre-R8 SGSN.

8. The method of claim 7, wherein the method comprises:
if the RAT1 access entity is a Pre-R8 SGSN, when the UE accessing the RAT1 access entity with TMSI information allocated by two RAT,
changing, by the UE, TMSI information allocated by any one of the two RAT to Type Length Value, TLV, format.

9. An Home Subscriber Server (HSS), **characterized in that** the HSS comprises:
a storing unit, configured to store information of access entities in at least two networks where a UE is registered; and
a processing unit, configured to initiate a Cancel Location process to an old access entity where the UE is registered, and to update access entity information stored in the storing unit by replacing the an old access entity where the UE is registered with an access entity accessed by the UE, if the access entity accessed by the UE is different from the old access entity where the UE is registered; wherein, ISR is not activated, and the access entity accessed by the UE and the old access entity where the UE is registered belong to the same RAT.

10. A system for dual registration processing, comprising a network that can communicate with a UE, **characterized in that** the network further comprises a HSS, which comprises:
a storing unit, configured to store information of access entities in at least two networks where a UE is registered; and
a processing unit, configured to initiate a Cancel Location process to an old access entity where the UE is registered, and to update access entity information stored in the storing unit by replacing the an old access entity where the UE is registered with an access entity accessed by the UE, if the access entity accessed by the UE is different from the old access entity where the UE is registered; wherein, ISR is not activated, and the access entity accessed by the UE and the old access entity where the UE is registered belong to the same RAT.
